# EUROPEAN PATENT SPECIFICATION

(11) **EP 3 724 622 B1**
(45) Date of publication and mention of the grant of the patent: **21.02.2024**
(21) Application number: 18793198.5
(22) Date of filing: 19.10.2018
(51) Int. Cl.: G01J 5/07, G01J 5/08, G01J 5/00, G01J 5/22

(54) **METHOD AND SYSTEM FOR MEASURING THE TEMPERATURE OF A MOVING METAL STRIP**
VERFAHREN UND SYSTEM ZUR MESSUNG DER TEMPERATUR EINES SICH BEWEGENDEN METALLSTREIFENS
PROCÉDÉ ET SYSTÈME POUR LA MESURE DE LA TEMPÉRATURE D'UNE BANDE MÉTALLIQUE EN MOUVEMENT

(30) Priority: 11.12.2017 EP 17206515; 09.03.2018 EP 18160976
(43) Date of publication of application: 21.10.2020
(73) Proprietor: Tata Steel IJmuiden B.V., 1951 JZ Velsen-Noord (NL)
(72) Inventor: WULLINK, Johan, 1970 CA IJmuiden (NL); DELICAAT, Christiaan Louis Augustinus, 1970 CA IJmuiden (NL); SPELBOS, Erwin, 1970 CA IJmuiden (NL)
(74) Representative: Group Intellectual Property Services
(86) International application number: PCT/EP2018/078696
(87) International publication number: WO 2019/115063

(56) References cited:
- JP-A- 2006 003 081
- KR-A- 20030 018 725
- US-A2- 2010 265 987

## Description

The invention relates to a method for measuring the temperature of a moving strip, wherein the strip is in contact with a roll such that a wedge shaped opening is present between the strip and the roll where the strip and the roll depart and a wedge shaped opening is present between the strip and the roll where the strip and the roll meet. The invention also relates to a system for measuring the temperature of a moving strip.

Measuring the temperature of a moving strip is important to control the properties of a strip. This measurement is for instance performed in the annealing furnace in which a full-hard cold rolled steel strip is annealed and optionally thereafter hot dip coated, for instance with zinc or a zinc alloy, or with aluminium or an aluminium alloy. The temperature during annealing is important to provide certain properties to the annealed strip, and the temperature of the strip is also important to control the entry temperature of the strip into the hot dip bath. Also the temperature of the strip after hot dip coating is important for certain steel grades.

At present two types of temperature measurements are known to measure the temperature of a steel strip in an annealing furnace, wherein the temperature of the strip at the place of measurement is usually above 300° C.

The temperature of a moving strip can be measured at any place using a scanning pyrometer. Infrared radiation coming from the surface of the strip is collected by using a rotating mirror. The radiation from the strip is reflected in this mirror and focussed on a single point detector. In this way, the temperature of the strip is measured over its full width. However, the emissivity of the strip is rather low in comparison to the emissivity of a black body, dependant on for example the presence of oxide. Moreover, the emissivity of the strip having a certain temperature depends on the steel type of the strip. Advanced High Strength Steels have an emissivity that is different from standard low carbon steels , such as IF steel. Furthermore, the measurement of the temperature of the strip is influenced by the hot walls of the annealing furnace in which the strip is measured. The radiation of the walls reflects on the strip and is measured as if it is the radiation of the strip itself. To prevent the radiation of the walls to be measured, the part of the surface of the strip that is to be measured is shielded by for example a water-cooled cone that is placed between the scanning pyrometer and the strip. The cone should have a low temperature, which is established by feeding tapping water through the double walls of the cone. The top of the cone is just outside the furnace and the scanning pyrometer is mounted on top of this cone. This construction has the risk that cooling water leaks into the furnace, which is absolutely forbidden. Moreover, such a construction is not easy to install, and costly.

Usually the temperature of an object is measured with a spot pyrometer. The basic set-up of such a spot pyrometer measurement is by pointing the spot pyrometer perpendicularly to the surface of for example a moving strip. The disadvantage of this method is that the temperature measurement result is dependent on the emissivity of the strip surface, and so a changing emissivity because a different steel grade is processed will cause a measurement error. It is known to measure the temperature of the steel in a wedge shaped opening between a roll and the moving strip, for instance from KR970010936B. According to the abstract of this document, the steel strip is cold. However, it is also known to use a 'radiation thermometer' for measuring the temperature of the moving strip in general in the wedge shaped opening, for instance from JP2000186962. The temperature of the strip in the wedge shaped opening is measured because in the wedge shaped opening the emissivity of the steel strip is not affected by infrared radiation noise from the surrounding, and the emissivity is almost the emissivity of a black body, so the emissivity value is close to unity.

However, the use of a pyrometer or radiation thermometer has the disadvantage that only one spot on the strip in the wedge shaped opening is measured. Furthermore, it is difficult to keep the measuring spot of the pyrometer always positioned at the wedge shaped opening, because the pyrometer is attached to one of the walls of the furnace. Because the furnace is heated and cooled in the course of time, the position of the pyrometer spot may shift. Further prior art is disclosed in US2010/265987 A2, JP2006003081 A, and KR20030018725 A.

It is an object of the invention to provide a method for measuring the temperature of a moving strip that is an improvement over the known measuring methods.

It is a further object of the invention to provide a method for measuring the temperature of a moving strip that can measure the temperature of the strip over at least part of its width, preferably over the full width of the strip.

It is another object of the invention to provide a method for measuring the temperature of a moving strip that measures the temperature of the strip with a deviation of at most 10° C.

It is furthermore an object of the invention to provide a method for measuring the temperature of a moving strip that is relatively easy to control.

It is moreover an object of the invention to provide a system for measuring the temperature of a moving strip.

According to the invention, one or more of these objects are reached by using a method for measuring the temperature of a moving strip as defined in claim 1.

Using an infrared or visible light camera for measuring the temperature of the strip in the wedge shaped opening instead of a pyrometer has the advantage that the temperature of at least a part of the width of the strip can be measured. The use of an infrared or visible light camera is advantageous over the use of a scanning pyrometer in that no moving parts are needed and in that a more accurate measurement is possible. Moreover, an infrared or visible light camera is less expensive in comparison to a scanning pyrometer.

In certain cases the full width of the strip can be measured with one camera. This can be in particular the case when the temperature of the strip is low, that is the temperature of the strip is at room temperature or slightly above, and it is easy to position the camera in front of the wedge shaped opening.

The use of an infrared or visible light camera has moreover the advantage that a 2D image is provided by the camera. The camera thus provides an image of the wedge shaped opening and its surroundings, thereby making it possible to detect shape defects of the strip like wavy edges or to detect surface defects or other changes on the surface of the strip due to a change in emissivity at that part of the strip.

A wedge shaped opening is present between a roll and a strip at the line where the strip departs from the roll, thus at the line where the strip separates from the roll, but also at the line where the strip makes first contact with the roll, thus where the strip and the roll meet. For both types of wedge shaped openings the method according to the invention can be used, be it that at the wedge shaped opening where the strip separates from the roll the temperature of the roll will be closer to the temperature of the strip than at the entrance side of the roll, especially at higher temperatures. Consequently, the temperature measurement on the side of the roll where strip and roll separate will be more accurate than on the side where strip and roll make first contact. Two infrared or visible light cameras are used, preferably one at each end of the roll. In this way each camera can be positioned on a side of a tunnel through which the strip moves, and each camera can measure part of the wedge shaped opening opposite to the side where the camera is positioned. Using one camera makes it difficult to measure the temperature in the wedge shaped opening because the camera should be positioned far from the wedge shaped opening.

The two infrared or visible light cameras together measure at least the total length of the wedge shaped opening between the strip and the roll. In this way the temperature of the strip is measured over its full width.

Using the above method, the two infrared or visible light cameras each measure more than one half of the wedge shaped opening, such that halfway the wedge shaped opening the cameras both measure the same part of the wedge shaped opening. Now the measurement of both cameras overlaps, the functioning of the cameras can be controlled by comparing the measurement values in the overlapping region.

The strip is a metal strip, preferably a steel strip. The method can be used outside the metal industry, such as in the production of a heated plastic web, but will be especially important for the metal industry. The method can for instance be used in the production of aluminium strip, but can be used very well in the production of steel strip, wherein the strip needs to be heated to significant temperatures, and cooled thereafter.

According to a preferred embodiment the strip has a temperature above room temperature, preferably a temperature between 50° C and 2000° C, more preferably between 50° C and 1200° C. It will be possible to measure the temperature of the strip in a wedge shaped opening at room temperature or below using an infrared camera, but at room temperature other temperature measurement methods are also possible. Thus, the method will be preferably used at a temperature above room temperature, especially at temperatures above 50° C, where other methods are not easy to use or show large deviations from the actual temperature of the strip. The method is especially useful in the range of 50° C to 1200° C, as used in the production processes of metal strip, especially steel strip.

Preferably the strip is turned around a roll along part of the circumference of the roll, preferably over an angle of at least 45°, more preferably over an angle of at least 90°. Especially for higher temperatures of the strip it is important that the contact length of the strip against the roll is long enough, because the roll should obtain a temperature that is almost the same as the temperature of the strip. In this way, the temperature in the wedge shaped opening where the strip and the roll depart is almost the same as the temperature of the strip, and thus the camera can measure the temperature of the strip accurately.

According to a preferred embodiment the visible light camera is a digital camera, preferably having a matrix sensor holding at least 640 x 480 pixels. A digital camera is a standard camera that is robust and provides enough detailed information about the wedge shaped opening and the surroundings of the wedge shaped opening when the matrix sensor has 640 x 480 pixels. The digital camera can for instance be a CMOS camera.

According to another preferred embodiment the infrared camera is a near infrared camera, short-wavelength infrared camera, mid-wavelength infrared camera or long-wavelength infrared camera measuring infrared wavelength between 0.8 and 12 µm, preferably a mid-wavelength infrared camera measuring infrared wavelength between 3 and 5 µm. Such an infrared camera can measure the temperatures of the wedge shaped opening that are lower than those for which the visible light camera is used. A mid-wavelength infrared camera can measure temperatures well between approximately 50° C and 500° C, a long-wavelength camera can measure even lower temperatures.

The method according to the invention can be advantageously used when the roll is part of an annealing furnace coupled to a hot dip coating line. In furnaces it is important to know what the temperature of the strip is, so the furnace can be controlled such that the strip has the required temperature. This is especially important in an annealing furnace, where the strip has to have different temperatures at different points in the annealing furnace. This is also the case when a steel strip is coated in a hot dip coating line, both before the strip is coated and after the coating has been applied.

Preferably a control system detects the position of the wedge shaped opening in an image generated by the camera and based on this position of the wedge shaped opening the control system can measure the temperature in the wedge shaped opening. The use of an infrared or visible light camera has the advantage that a 2D image is provided by the camera and that by means of a control system the exact position of the wedge shape opening can be found. In this way there is no critical pointing of the camera towards the wedge shape opening needed, because if the image is shifted caused by heating and cooling of for instance the furnace wall, this control system will find the shifted position of the wedge shape opening.

According to a second aspect of the invention a system for measuring the temperature of a moving strip according to claim 9 is provided.

The use of an infrared or visible light measuring camera makes it possible to accurately measure the temperature of the strip in the wedge shaped opening over at least a part of the length of the wedge shaped opening.

According to a preferred embodiment the visible light camera is a digital camera, preferably having a matrix sensor holding at least 640 x 480 pixels, or the infrared camera is an infrared camera measuring infrared wavelength between 0.8 and 12 µm, preferably a mid-wavelength infrared camera measuring infrared wavelength between 3 and 5 µm. With the digital camera strips having a relatively high temperature can be measured, and with the mid-wavelength infrared camera strips having a relatively low temperature can be measured. The digital camera is for instance a CMOS camera.

According to the invention two infrared or visible light cameras are used, each at one end of the roll. The advantages are elucidated above. The roll is part of an annealing furnace, preferably an annealing furnace coupled to a hot dip coating line. In a furnace, the two cameras can be positioned on or in the sidewalls of the furnace such that each camera can measure the opposite half of the wedge shaped opening. Positioned in this way, the openings through the walls of the furnace through which the cameras measure are easier to make since these openings are less oblique.

Other aspects of the system for measuring the temperature of a moving strip will be readily apparent from the description of the method according to the invention, above.

The invention will be elucidated with reference to an embodiment of a system for measuring the temperature of a moving strip.

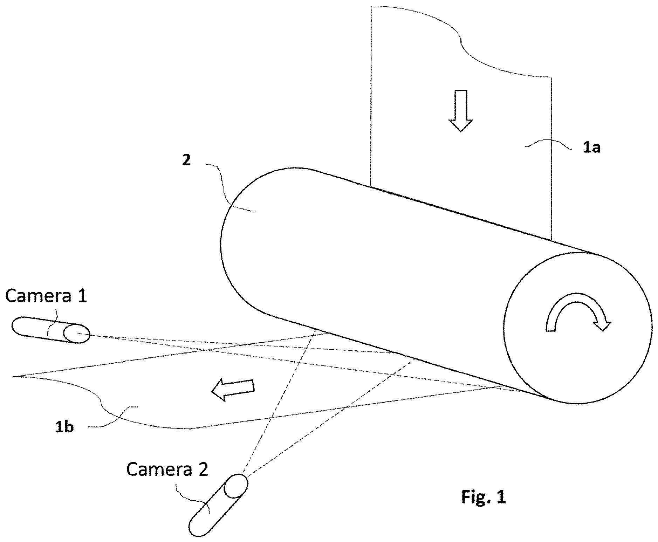

Figure 1 shows, in a very schematic way, a system for measuring the temperature of a moving strip according to the invention.

Figure 1 shows a section of a moving strip 1, of which a first part 1a is moving towards a roll 2, which roll is rotating in the direction of the curved arrow. A second part 1b of the moving strip 1 departs from the rotating roll 2.

The moving strip 1 is turned around the roll 2 over an angle of about 90 degrees and is thus deflected from a vertical position of first part 1a to a horizontal position of second part 1b. At the line where the first part 1a meets the roll 2, a wedge shaped opening is present between the strip 1 and the roll 2. In the same way, at the line where the strip 1 separates from the roll 2, a wedge shaped opening is present between the roll 2 and the strip 1.

In the specific situation for the measuring of the temperature of a steel strip in an annealing furnace, the roll 2 will be part of the annealing furnace; the roll will be present between walls (not shown) of this annealing furnace. In the annealing furnace, the strip 1 will have a temperature above room temperature, and usually the strip will have a temperature between 100 and 1000° C. Due to the temperature of the strip, the roll will also have a higher temperature, resulting from the contact with the strip. Especially at the line where the strip 1 separates from the roll 2, the temperature of the roll 2 will be almost the same as the temperature of the strip 1. For this reason, the measuring of the temperature of the strip will be performed in the wedge shaped opening between the roll and the strip separating from the roll. However, according to the invention it is also possible to measure the temperature of the strip at the wedge shaped opening formed at the line of first contact between the strip and the roll.

To measure the temperature of the strip in the wedge shaped opening between the roll and the strip at the position where the strip departs from the roll, two cameras are positioned in the walls of the annealing furnace, each at one side of the roll and the departing strip, as shown in Figure 1. Each camera is oriented such that it measures more than one half of the wedge shaped opening at the opposite side of the strip. In this way the camera can be placed less oblique in the furnace wall. The cameras are oriented such that they measure an overlapping part of the wedge shaped opening, which makes it possible to control the functioning of the cameras by comparing the measurement values in the overlapping region. The two cameras together measure the temperature of the wedge shaped opening over the full width of the strip.

When the temperature of the strip is high, for instance above 500° C, visible light cameras can be used. When the temperature of the strip is lower, infrared cameras can be used, such as mid-wavelength infrared cameras for temperatures between 50 and 500° C. For even lower temperatures long-wavelength cameras can be used.

A control system is in place to detect the position of the wedge shaped opening in an image generated by the camera. Based on the measurement of the camera, the temperature in the wedge shaped opening can be measured.

It will be clear that the above described system for measuring the temperature of a moving strip and the method to use it can be used at various positions in an annealing furnace, and that such a system can also be used in a hot dip coating line that is coupled to an annealing furnace.

However, the system for measuring the temperature of a moving strip and the method for measuring the temperature of a moving strip can also be used outside annealing furnaces, and is not only useful for steel strip, or metal strip in general, but also for other types of moving strip, especially when the strip moves at elevated temperatures. The person skilled in the art will readily contemplate the situations where the present invention can be used.

## Claims

1. Method for measuring the temperature of a moving metal strip in an annealing furnace, wherein the strip is in contact with a roll that is part of the furnace such that a wedge shaped opening is present between the strip and the roll where the strip and the roll depart and such that a wedge shaped opening is present between the strip and the roll where the strip and the roll meet, wherein the temperature of the strip is measured along at least part of the length of at least one of the wedge shaped openings using an infrared or visible light measuring camera, **characterised in that** two infrared or visible light cameras are used, one at each end of the roll, and wherein the two infrared or visible light cameras together measure at least the total length of the wedge shaped opening between the strip and the roll and wherein the two infrared or visible light cameras each measure more than one half of the wedge shaped opening, such that halfway the wedge shape opening the cameras both measure the same part of the wedge shaped opening to allow controlling the functioning of the cameras by comparing the measurement values in the overlapping region.

2. Method according to claim 1 wherein the two infrared or visible light cameras each measure the temperature of the strip along at least part of the length of the wedge shaped opening where the strip separates from the roll.

3. Method according to claims 1 or 2, wherein the strip has a temperature between 50° C and 1200° C.

4. Method according to any one of the preceding claims, wherein the strip is turned around a roll along part of the circumference of the roll over an angle of at least 45°.

5. Method according to any one of the preceding claims, wherein the infrared camera is a near infrared camera, a short-wavelength infrared camera, a mid-wavelength infrared camera or a long-wavelength infrared camera measuring infrared wavelength between 0.8 and 12 µm.

6. Method according to any one of the preceding claims, wherein the roll is part of an annealing furnace coupled to a hot dip coating line.

7. Method according to any one of the preceding claims, wherein a control system detects the exact position of the wedge shaped opening in an image generated by the camera and based on this position of the wedge shaped opening the temperature in the wedge shaped opening is measured.

8. Method according to any one of the preceding claims, wherein the temperature of the strip is between 100 and 1000 °C.

9. System for measuring the temperature of a moving metal strip, the system comprising an annealing furnace, in which a roll is arranged, wherein during use the strip is in contact with the roll that is part of the furnace, such that a wedge shaped opening is present between the strip and the roll where the strip and the roll depart and such that a wedge shaped opening is present between the strip and the roll where the strip and the roll meet, wherein the system for measuring the temperature of the strip along at least part of the length of at least one of the wedge shaped openings uses two infrared or visible light measuring cameras, one at each end of the roll, and wherein the two infrared or visible light cameras are arranged to together measure at least the total length of the wedge shaped opening between the strip and the roll and wherein the two infrared or visible light cameras are arranged to each measure more than one half of the wedge shaped opening, such that halfway the wedge shape opening the two cameras both measure the same part of the wedge shaped opening to allow controlling the functioning of the cameras by comparing the measurement values in the overlapping region.

10. System according to 9 wherein the two infrared or visible light cameras are arranged such that each camera measures the temperature of the strip along at least part of the length of the wedge shaped opening where the strip separates from the roll.

11. System according to anyone of the claims 9 or 10 wherein, the system is adapted to measure temperatures of the strip of between 50° C and 1200° C.

12. System according to anyone of the claims 9 - 11, wherein the infrared camera is a near infrared camera, a short-wavelength infrared camera, a mid-wavelength infrared camera or a long-wavelength infrared camera measuring infrared wavelength between 0.8 and 12 µm.

13. System according to anyone of the claims 9 - 12,wherein the system comprises a hot dip coating line, to which the annealing furnace is coupled.

14. System according to any one of the claims 9 - 13 wherein the system comprises a control system configured to detect the exact position of the wedge shaped opening in an image generated by the camera to measure the temperature in the wedge shaped opening.

15. System according to any one of claims 9 - 14 wherein the two cameras are positioned in or on the sidewalls of the furnace.

## Patentansprüche

1. Verfahren zum Messen der Temperatur eines sich bewegenden Metallbands in einem Glühofen, wobei das Band in Kontakt mit einer Rolle ist, die Teil des Ofens ist, sodass eine keilförmige Öffnung zwischen dem Band und der Rolle vorhanden ist, wo das Band und die Rolle sich entfernen, und sodass eine keilförmige Öffnung zwischen dem Band und der Rolle vorhanden ist, wo das Band und die Rolle sich treffen, wobei die Temperatur des Bands entlang mindestens eines Teils der Länge von mindestens einer der keilförmigen Öffnungen unter Verwendung einer Infrarot- oder sichtbaren Lichtmesskamera gemessen wird, **dadurch gekennzeichnet, dass** zwei Infrarotkameras oder Kameras sichtbaren Lichts verwendet werden, eine an jedem Ende der Rolle, und wobei die zwei Infrarotkameras oder Kameras sichtbaren Lichts zusammen mindestens die Gesamtlänge der keilförmigen Öffnung zwischen dem Band und der Rolle messen und wobei die zwei Infrarotkameras oder Kameras sichtbaren Lichts jeweils mehr als eine Hälfte der keilförmigen Öffnung messen, sodass auf der Hälfte der keilförmigen Öffnung beide Kameras denselben Teil der keilförmigen Öffnung messen, um das Steuern des Funktionierens der Kameras durch Vergleichen der Messwerte in dem überlappenden Bereich zu ermöglichen.

2. Verfahren nach Anspruch 1, wobei die zwei Infrarotkameras oder Kameras sichtbaren Lichts jeweils die Temperatur des Bands entlang mindestens eines Teils der Länge der keilförmigen Öffnung messen, an der sich das Band von der Rolle trennt.

3. Verfahren nach Anspruch 1 oder 2, wobei das Band eine Temperatur zwischen 50 °C und 1200 °C aufweist.

4. Verfahren nach einem der vorherigen Ansprüche, wobei das Band entlang eines Teils des Umfangs der Rolle in einem Winkel von mindestens 45° um die Rolle gedreht wird.

5. Verfahren nach einem der vorherigen Ansprüche, wobei die Infrarotkamera eine Nahinfrarotkamera, eine Infrarotkamera kurzer Wellenlänge, eine Infrarotkamera mittlerer Wellenlänge oder eine Infrarotkamera langer Wellenlänge ist, die Infrarotwellenlängen zwischen 0,8 und 12 µm misst.

6. Verfahren nach einem der vorherigen Ansprüche, wobei die Rolle Teil eines Glühofens ist, der mit einer Tauchbeschichtungsanlage gekoppelt ist.

7. Verfahren nach einem der vorherigen Ansprüche, wobei ein Steuersystem die genaue Position der keilförmigen Öffnung in einem von der Kamera erzeugten Bild erfasst und basierend auf dieser Position der keilförmigen Öffnung die Temperatur in der keilförmigen Öffnung gemessen wird.

8. Verfahren nach einem der vorherigen Ansprüche, wobei die Temperatur des Bands zwischen 100 und 1000 °C ist.

9. System zum Messen der Temperatur eines sich bewegenden Metallbands, das System umfassend einen Glühofen, in dem eine Rolle angeordnet ist, wobei das Band während des Gebrauchs in Kontakt mit der Rolle ist, die Teil des Ofens ist, sodass eine keilförmige Öffnung zwischen dem Band und der Rolle vorhanden ist, wo das Band und die Rolle sich entfernen, und sodass eine keilförmige Öffnung zwischen dem Band und der Rolle vorhanden ist, wo das Band und die Rolle sich treffen, wobei das System zum Messen der Temperatur des Bands entlang mindestens eines Teils der Länge von mindestens einer der keilförmigen Öffnungen zwei Kameras umfasst, die Infrarot oder sichtbares Licht messen, wobei die zwei Infrarotkameras oder Kameras sichtbaren Lichts angeordnet sind, um mindestens die Gesamtlänge der keilförmigen Öffnung zwischen dem Band und der Rolle zu messen, und wobei die zwei Infrarotkameras oder Kameras sichtbaren Lichts angeordnet sind, um mehr als eine Hälfte der keilförmigen Öffnung zu messen, sodass die zwei Kameras auf der Hälfte der keilförmigen Öffnung beide denselben Teil der keilförmigen Öffnung messen, um ein Steuern der Funktion der Kameras durch Vergleichen der Messwerte in dem überlappenden Bereich zu ermöglichen.

10. System nach Anspruch 9, wobei die zwei Infrarotkameras oder Kameras sichtbaren Lichts angeordnet sind, sodass jede Kamera die Temperatur des Bands entlang mindestens eines Teils der Länge der keilförmigen Öffnung misst, an der sich das Band von der Rolle trennt.

11. System nach einem der Ansprüche 9 oder 10,
wobei das System zum Messen von Temperaturen des Bands zwischen 50 °C und 1200 °C geeignet ist.

12. System nach einem der Ansprüche 9 - 11, wobei die Infrarotkamera eine Nahinfrarotkamera, eine Infrarotkamera kurzer Wellenlänge, eine Infrarotkamera mittlerer Wellenlänge oder eine Infrarotkamera langer Wellenlänge ist, die Infrarotwellenlängen zwischen 0,8 und 12 µm misst.

13. System nach einem der Ansprüche 9 - 12, wobei das System eine Feuerbeschichtungsanlage umfasst, an die der Glühofen gekoppelt ist.

14. System nach einem der Ansprüche 9 - 13, ferner umfassend ein Steuersystem, das konfiguriert ist, um die genaue Position der keilförmigen Öffnung in einem von der Kamera erzeugten Bild zu erfassen, um die Temperatur in der keilförmigen Öffnung zu messen.

15. System nach einem der Ansprüche 9 - 14, wobei die zwei Kameras in oder an den Seitenwänden des Ofens positioniert sind.

## Revendications

1. Procédé permettant de mesurer la température d'une bande métallique en mouvement dans un four de recuit, ladite bande étant en contact avec un rouleau qui fait partie du four de sorte qu'une ouverture cunéiforme soit présente entre la bande et le rouleau à l'endroit où la bande et le rouleau s'écartent et de sorte qu'une ouverture cunéiforme soit présente entre la bande et le rouleau à l'endroit où la bande et le rouleau se rencontrent, ladite température de la bande étant mesurée sur au moins une partie de la longueur d'au moins l'une des ouvertures cunéiformes à l'aide d'une caméra de mesure à lumière infrarouge ou visible, **caractérisé en ce que** deux caméras de mesure à lumière infrarouge ou visible sont utilisées, une au niveau de chaque extrémité du rouleau, et lesdites deux caméras à lumière infrarouge ou visible mesurant ensemble au moins la longueur totale de l'ouverture cunéiforme entre la bande et le rouleau et lesdites deux caméras à lumière infrarouge ou visible mesurant chacune plus d'une moitié de l'ouverture cunéiforme, de sorte qu'à mi-chemin de l'ouverture cunéiforme, les caméras mesurent toutes les deux la même partie de l'ouverture cunéiforme pour permettre de commander le fonctionnement des caméras en comparant les valeurs de mesure dans la zone de chevauchement.

2. Procédé selon la revendication 1, lesdites deux caméras à lumière infrarouge ou visible mesurant chacune la température de la bande sur au moins une partie de la longueur de l'ouverture cunéiforme à l'endroit où la bande se sépare du rouleau.

3. Procédé selon la revendication 1 ou 2, ladite bande comportant une température comprise entre 50°C et 1200°C.

4. Procédé selon l'une quelconque des revendications précédentes, ladite bande étant tournée autour d'un rouleau sur une partie de la circonférence du rouleau selon un angle d'au moins 45°.

5. Procédé selon l'une quelconque des revendications précédentes, ladite caméra infrarouge étant une caméra proche infrarouge, une caméra infrarouge à courte longueur d'onde, une caméra infrarouge à moyenne longueur d'onde ou une caméra infrarouge à grande longueur d'onde mesurant la longueur d'onde infrarouge entre 0,8 et 12 µm.

6. Procédé selon l'une quelconque des revendications précédentes, ledit rouleau faisant partie d'un four de recuit couplé à une ligne d'enduction par immersion à chaud.

7. Procédé selon l'une quelconque des revendications précédentes, un système de commande détectant la position exacte de l'ouverture cunéiforme dans une image générée par la caméra et, en fonction de cette position de l'ouverture cunéiforme, la température dans l'ouverture cunéiforme étant mesurée.

8. Procédé selon l'une quelconque des revendications précédentes, ladite température de la bande étant comprise entre 100 et 1000°C.

9. Système permettant de mesurer la température d'une bande métallique en mouvement, le système comprenant un four de recuit, dans lequel un rouleau est agencé, pendant l'utilisation ladite bande étant en contact avec le rouleau qui fait partie du four, de sorte qu'une ouverture cunéiforme soit présente entre la bande et le rouleau à l'endroit où la bande et le rouleau s'écartent et de sorte qu'une ouverture cunéiforme soit présente entre la bande et le rouleau à l'endroit où la bande et le rouleau se rencontrent, ledit système permettant de mesurer la température de la bande sur au moins une partie de la longueur d'au moins l'une des ouvertures cunéiformes comprenant deux caméras de mesure à lumière infrarouge ou visible, une au niveau de chaque extrémité du rouleau, et lesdites deux caméras à lumière infrarouge ou visible étant agencées es pour mesurer au moins la longueur totale de l'ouverture cunéiforme entre la bande et le rouleau et lesdites deux caméras à lumière infrarouge ou visible étant agencées pour mesurer plus d'une moitié de l'ouverture cunéiforme, de sorte qu'à mi-chemin de l'ouverture cunéiforme les deux caméras mesurent toutes deux la même partie de l'ouverture cunéiforme pour permettre de commander le fonctionnement des caméras en comparant les valeurs de mesure dans la zone de chevauchement.

10. Système selon la revendication 9, lesdites deux caméras à lumière infrarouge ou visible étant agencées de sorte que chaque caméra mesure la température de la bande sur au moins une partie de la longueur de l'ouverture cunéiforme à l'endroit où la bande se sépare du rouleau.

11. Système selon l'une quelconque des revendications 9 ou 10, ledit système étant adapté à la mesure des températures de la bande entre 50°C et 1200°C.

12. Système selon l'une quelconque des revendications 9 à 11, ladite caméra infrarouge étant une caméra infrarouge proche, une caméra infrarouge à courte longueur d'onde, une caméra infrarouge à moyenne longueur d'onde ou une caméra infrarouge à grande longueur d'onde mesurant la longueur d'onde infrarouge entre 0,8 et 12 µm.

13. Système selon l'une quelconque des revendications 9 à 12, ledit système comprenant une ligne une ligne de revêtement au trempé à chaud, à laquelle est couplé le four de recuit.

14. Système selon l'une quelconque des revendications 9 à 13, comprenant en outre un système de commande conçu pour détecter la position exacte de l'ouverture cunéiforme dans une image générée par la caméra pour mesurer la température dans l'ouverture cunéiforme.

15. Système selon l'une quelconque des revendications 9 à 14, lesdites deux caméras étant positionnées dans les parois latérales du four ou sur celles-ci.
